(19) Europäisches Patentamt
European Patent Office
Office européen des brevets

(11) **EP 1 813 957 B1**

(12) **FASCICULE DE BREVET EUROPEEN**

(45) Date de publication et mention
de la délivrance du brevet:
**10.03.2010 Bulletin 2010/10**

(21) Numéro de dépôt: **06300040.0**

(22) Date de dépôt: **19.01.2006**

(51) Int Cl.:
***G01S 5/02*** *(2010.01)*   ***G01S 5/14*** *(2006.01)*

(54) **Dispositif de contrôle de position(s) relative(s) par analyse de signaux bi-fréquences, pour un engin spatial d'un groupe d'engins spatiaux en formation**

Vorrichtung zur Regelung der relativen Positionen von einer Gruppe in Formation fliegender Raumschiffe durch Analyse von Zweifrequenzsignalen

Device controlling relative position(s) by analysing dual frequency signals for use by a spacecraft in a group of spacecraft in formation

(84) Etats contractants désignés:
**AT BE BG CH CY CZ DE DK EE ES FI FR GB GR HU IE IS IT LI LT LU LV MC NL PL PT RO SE SI SK TR**

(43) Date de publication de la demande:
**01.08.2007 Bulletin 2007/31**

(73) Titulaire: **Thales**
**92200 Neuilly-sur-Seine (FR)**

(72) Inventeurs:
• **Mehlen, Christian**
**ALCATEL ALENIA SPACE CANNES**
**06156 CANNES LA BOCCA CEDEX (FR)**
• **Pierre, Estelle**
**ALCATEL ALENIA SPACE CANNES**
**06156 CANNES LA BOCCA CEDEX (FR)**

(74) Mandataire: **Esselin, Sophie et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**EP-A- 0 777 128       US-A- 3 290 677**
**US-A- 5 347 286       US-A- 6 072 433**

• **DEININGER W D ET AL: "Formation flying activities and capabilities at ball aerospace" AEROSPACE CONFERENCE, 2003. PROCEEDINGS. 2003 IEEE MARCH 8-15, 2003, PISCATAWAY, NJ, USA,IEEE, vol. 6, 8 mars 2003 (2003-03-08), pages 62599-62614, XP010660555 ISBN: 0-7803-7651-X**

**Description**

L'invention concerne les groupes d'engins spatiaux, comme par exemple des satellites, destinés à se déplacer en formation pour assurer collectivement une mission, et plus précisément le contrôle des positions relatives de ces engins spatiaux les uns par rapport aux autres.

Comme le sait l'homme de l'art, certains groupes d'engins spatiaux doivent être positionnés les uns par rapport aux autres avec une certaine précision afin d'assurer collectivement une mission. Ce positionnement intervient nominalement pendant plusieurs phases de la mission : déploiement après lancement, croisière, et maintien fin de la formation pour réaliser son objectif de mission. Le positionnement peut également intervenir pour effectuer une reconfiguration partielle ou totale du groupe, ou pour pallier une défaillance technique (ou une panne d'équipement) de l'un au moins des engins spatiaux.

Le positionnement par une technique de type GPS relatif n'est pas toujours adapté à ce type de mission soit parce que l'altitude de la mission est trop élevée par rapport à l'altitude de la constellation GPS (« Global Positioning System »- positionnement par satellites), soit parce qu'un moyen de positionnement supplémentaire ou indépendant est requis.

Afin de permettre un tel positionnement, il a été proposé d'équiper les engins spatiaux d'un dispositif de contrôle comportant au moins, d'une première part, des antennes d'émission/réception, éventuellement complétées par des antennes de réception, implantées sur des faces d'orientations différentes de l'engin spatial, et chargées d'émettre/recevoir des signaux radiofréquences (RF), d'une deuxième part, un « senseur RF » comprenant notamment des premiers moyens de mesure chargés d'estimer des différences de marche de signaux reçus entre antennes, et d'une troisième part, des moyens de traitement chargés d'estimer les directions de transmission des signaux qui sont émis par les autres engins spatiaux du groupe (généralement appelées « axes à vue »), à partir des différences de marche, comme décrit notamment dans le document US-A-6 072 433.

Un tel dispositif de contrôle peut également comprendre des seconds moyens de mesure chargés d'estimer chaque distance séparant leur engin spatial de l'un des autres engins spatiaux du groupe, à partir des signaux reçus par les antennes et de signaux auxiliaires transmis par les autres engins spatiaux du groupe. Dans ce cas, les moyens de traitement peuvent déterminer les positions relatives des engins spatiaux du groupe par rapport à un référentiel choisi, à partir des distances estimées et des axes à vue estimés.

Une telle détermination de positions relatives permet alors de contrôler les engins spatiaux du groupe afin de les amener et de les maintenir dans la configuration géométrique requise par la mission et de décider de toute manoeuvre d'évitement en cas de détection d'un risque de collision entre engins spatiaux.

L'obtention d'une précision centimétrique ou sub-centimétrique des positions relatives nécessite de travailler sur des mesures de phase de porteuse. L'homme de l'art sait usuellement mesurer la phase avec une précision égale à une fraction de la longueur d'onde (typiquement 5 % de la longueur d'onde dans un environnement avec des multi-trajets raisonnables). Cependant, les mesures de phase étant connues à $2\pi$ près, elles sont ambiguës, et une difficulté consiste à lever cette ambiguïté.

L'utilisation de signaux à fréquence très élevée (en SHF ou EHF) permet de disposer d'une bande de fréquence large, ce qui peut faciliter le lever d'ambiguïté au moyen de techniques de balayage de la porteuse ou de techniques multi-porteuses. L'affaiblissement d'un signal en espace libre étant proportionnel au carré de sa fréquence, lorsque l'on utilise des signaux de fréquence très élevée, il faut soit une puissance émise élevée, soit une antenne directive, ce qui limite le domaine d'utilisation de ces fréquences très élevées. Il n'est en effet pas possible de déterminer les positions relatives précises des engins spatiaux du groupe lorsque leurs positions initiales correspondent à des axes à vue fortement inclinés.

L'utilisation de fréquences plus basses, comme celles allouées en bande S aux liaisons spatiales bord/sol et bord/bord (2,0 GHz à 2,2 GHz), permet d'utiliser des antennes omni-directionnelles et une puissance d'émission faible (en dessous du watt pour des distances inter-engins spatiaux de plusieurs dizaines de kilomètres). Il est possible d'utiliser deux fréquences distantes d'environ 100 MHz à l'intérieur de cette bande pour faciliter le lever d'ambiguïté : on combine alors les mesures de phase issues de ces deux fréquences pour obtenir une mesure de phase sur une porteuse virtuelle dont la longueur d'onde est plus longue. Une combinaison possible consiste à soustraire les mesures de phase des deux fréquences, afin d'obtenir une mesure de phase associée à la fréquence de battement des deux fréquences.

On passe ainsi d'une longueur d'onde réelle d'environ 15 cm à une longueur d'onde virtuelle d'environ 3 m. Si la distance qui sépare les antennes vaut par exemple 1 m, la différence de marche est forcément comprise entre -1 m et +1 m. L'utilisation d'une longueur d'onde d'environ 3 m fournit alors une mesure non ambiguë de cette différence de marche. Mais cette mesure est entachée d'une erreur importante : si l'erreur de mesure sur la phase des deux fréquences est d'environ 5% de la longueur d'onde (5 % de 15 cm valent 7,5 mm), l'erreur sur la mesure de phase combinée peut atteindre 10% de la longueur d'onde « longue » (10 % de 3 m valent 30 cm).

Les principales sources d'erreur sont les multi-trajets et les résiduels de calibration de propagation dans l'électronique de réception. Ces erreurs évoluent très lentement et sont difficilement filtrables, notamment si le nombre d'engins spatiaux est réduit à deux, car il n'y a alors aucune redondance d'observation.

L'invention a donc pour but d'améliorer la situation, notamment à partir des observations suivantes :

- la mesure de différence de marche obtenue en combinant deux fréquences est non-ambiguë, mais approximative. Toutefois, la variation dans le temps de la différence de marche n'est pas une grandeur ambiguë et peut être mesurée de manière précise grâce à l'une des deux fréquences, et
- la variation de la différence de marche observée dans un engin spatial hôte peut être le résultat d'un déplacement latéral de l'autre engin spatial ou d'une rotation de l'engin spatial hôte, différentiables au moyen d'un senseur d'attitude (comme par exemple un traqueur d'étoile).

L'invention propose un dispositif de contrôle, pour un engin spatial d'un groupe d'engins spatiaux destiné à se déplacer selon une formation choisie, et tel que défini par la revendication 1.

Le dispositif selon l'invention peut comporter d'autres caractéristiques qui peuvent être prises séparément ou en combinaison, et notamment :

- avant d'ordonner l'entraînement en rotation, ses moyens de traitement peuvent être chargés d'ordonner la stabilisation du positionnement grossier à vitesse quasi-nulle en utilisant la mesure (précise) de variation de l'une des première et seconde différences de marche, effectuée par les premiers moyens de mesure ;
- ses moyens de traitement peuvent être chargés d'entretenir (par la suite) la connaissance précise de la direction de transmission grâce à la mesure des variations de l'une des première et seconde différences de marche;
- ses premiers moyens de mesure peuvent être chargés :

  • de déterminer les première et seconde phases des premiers et seconds signaux reçus par chacune des antennes de l'ensemble en provenance de l'autre engin spatial,
  • de déduire des premières et secondes phases des premières et secondes différences de phase entre l'antenne d'émission/réception et chacune des deux antennes réceptrices,
  • de déduire des premières et secondes différences de phase des troisièmes différences de phase correspondant à l'écart fréquentiel (qui correspond lui-même de préférence à une longueur d'onde plus longue que le double de la distance entre les antennes),
  • de déduire de premières ou secondes différences de phase consécutives et de troisièmes différences de phase consécutives des mesures de variation de première ou seconde différence de marche, et
  • de déduire des mesures de variation de première ou seconde différence de marche des mesures non ambiguë des première et seconde différences de marche correspondant à la première ou seconde fréquence ;

- il peut comprendre des seconds moyens de mesure chargés d'estimer la distance séparant leur engin spatial de l'autre engin spatial du groupe à partir des premiers et/ou seconds signaux reçus par au moins l'une des antennes en provenance de l'autre engin spatial. Dans ce but, le premier et/ou le second signal est par exemple modulé, d'une part, par un code pseudo-aléatoire permettant d'obtenir une mesure de pseudo-distance, et d'autre part, par des données qui permettent aux engins spatiaux d'échanger des informations parmi lesquelles il y a au minimum leurs mesures de pseudo-distances respectives, afin d'identifier le biais d'horloge et d'obtenir une mesure de distance vraie. La mesure de distance obtenue par l'observation du code pseudo-aléatoire est peu précise, et son bruit de mesure peut être réduit par une technique de lissage du code par la porteuse (bien connue de l'homme de l'art). L'observation du code pseudo-aléatoire reçu permet également au dispositif de contrôle de l'engin spatial hôte de connaître l'heure du dispositif de contrôle de l'autre engin spatial, ce qui permet de synchroniser les périodes d'émission et de réception entre les engins spatiaux du groupe ;
- lorsque les premiers et seconds moyens de mesure sont utilisés, les moyens de traitement (MT) sont chargés de déterminer les positions relatives des engins spatiaux par rapport à l'engin spatial hôte à partir des distances estimées et de la direction de transmission estimée précise ;
- ses moyens de traitement peuvent être chargés d'affiner la mesure de distance et/ou la mesure de direction de transmission en les corrigeant de l'effet des multi-trajets. Cette correction nécessite de posséder des données cartographiques tabulées des multi-trajets sur les engins spatiaux, obtenues préalablement, par exemple au moyen d'essais dans une chambre anéchoide. L'utilisation d'une cartographie tabulée est efficace seulement si l'on connaît la direction de transmission avec une précision suffisante, telle que celle apportée par l'invention ;
- il peut comprendre au moins deux ensembles d'antennes sur au moins deux faces d'orientations différentes ;
- il peut comprendre au moins une antenne d'émission/réception complémentaire sur au moins une face dépourvue d'ensemble d'antennes ;
- les antennes peuvent être capables d'émettre et/ou recevoir des premiers et seconds signaux radiofréquences se présentant sous la forme de première et seconde porteuses dont l'une au moins est modulée par un code pseudo-aléatoire choisi ;

- les antennes peuvent être capables d'émettre/recevoir des premières et secondes porteuses présentant des première et seconde fréquences appartenant à une bande de fréquences choisie parmi les bandes S, SHF et EHF.

L'invention propose également un engin spatial, destiné à se déplacer en formation au sein d'un groupe d'engins spatiaux, et équipé d'un dispositif de contrôle du type de celui présenté ci-avant.

L'invention propose également un groupe d'engins spatiaux, destiné à se déplacer selon une formation choisie, dont l'un au moins des engins spatiaux comprend un dispositif de contrôle du type de celui présenté ci-avant, et dont certains au moins des autres engins spatiaux comportent au moins une antenne d'émission/réception implantée sur au moins une face choisie.

L'invention est particulièrement bien adaptée, bien que de façon non exclusive, aux engins spatiaux de type satellite.

D'autres caractéristiques et avantages de l'invention apparaîtront à l'examen de la description détaillée ci-après, et des dessins annexés, sur lesquels :

- la figure 1 illustre de façon très schématique un groupe de trois satellites en formation, dont l'un comprend un dispositif de contrôle selon l'invention,
- la figure 2 illustre de façon très schématique un exemple de positionnement de trois antennes d'un même ensemble, sur une face de satellite,
- la figure 3 illustre de façon très schématique un exemple de réalisation d'un dispositif de contrôle selon l'invention,
- la figure 4 illustre de façon schématique la différence de marche, entre des antennes principale et secondaire d'un premier satellite, de signaux émis par un second satellite,
- la figure 5 illustre de façon très schématique l'étape de positionnement d'un satellite, équipé d'un dispositif de contrôle selon l'invention, par rapport à un axe à vue déterminé de façon grossière,
- la figure 6 illustre de façon très schématique les principaux paramètres intervenant dans la détermination des coordonnées précises d'un axe à vue en présence d'une rotation considérée de façon bidimensionnelle, et
- la figure 7 illustre de façon très schématique les principaux paramètres intervenant dans la détermination des coordonnées précises d'un axe à vue en présence d'une rotation considérée de façon tridimensionnelle.

Les dessins annexés pourront non seulement servir à compléter l'invention, mais aussi contribuer à sa définition, le cas échéant.

L'invention a pour objet de permettre la détermination, par un dispositif de contrôle implanté dans un engin spatial d'un groupe d'engins spatiaux se déplaçant en formation, d'axes à vue précis (avec une précision des coordonnées de l'axe à vue de l'ordre de quelques mm), ainsi qu'éventuellement de distances inter-engins spatiaux précises (avec une précision de l'ordre du centimètre), de manière à connaître la position relative des engins spatiaux. Cette connaissance des positions relatives des engins spatiaux du groupe peut également permettre de les contrôler afin de les amener et de les maintenir dans la configuration géométrique requise par la mission et de décider de toute manoeuvre d'évitement en cas de détection d'un risque de collision entre engins spatiaux.

Dans ce qui suit, on considère à titre d'exemple non limitatif que les engins spatiaux du groupe sont des satellites volant en formation afin de remplir une mission d'observation spatiale ou terrestre.

Mais, l'invention n'est pas limitée à ce type de engin spatial. Elle concerne en effet tous les engins spatiaux destinés à voler en formation selon une configuration choisie (éventuellement modifiable).

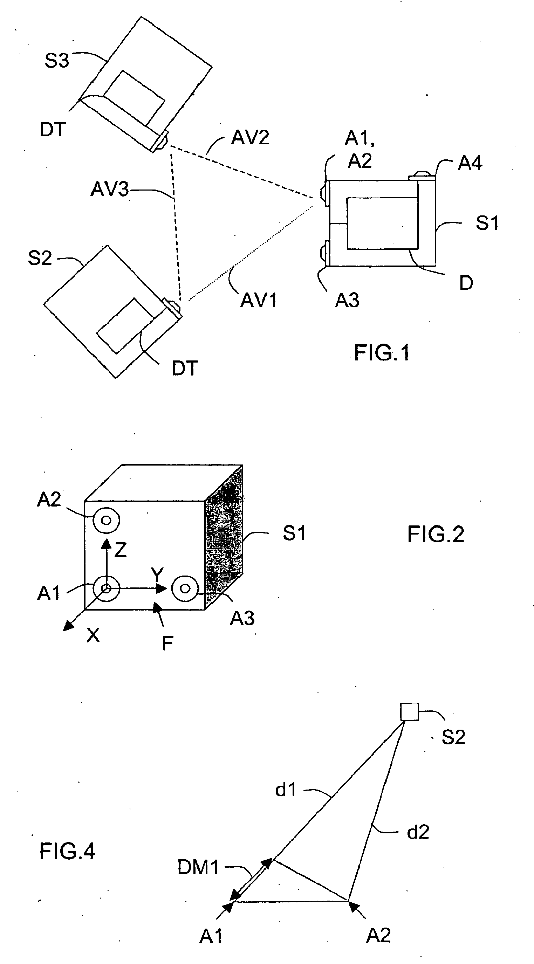

On se réfère tout d'abord aux figures 1 à 3 pour présenter un groupe d'engins spatiaux auquel peut s'appliquer l'invention.

Sur la figure 1 se trouve représenté un groupe de trois engins spatiaux (satellites) Si (i= 1 à 3) volant en formation. Il est important de noter que l'invention n'est pas limitée aux groupes comportant trois engins spatiaux. Elle concerne en effet tout groupe dès lors qu'il comprend au moins deux engins spatiaux.

Au sein d'un tel groupe, l'un au moins des engins spatiaux, ici S1, comporte un dispositif de contrôle D selon l'invention, tandis que les autres engins spatiaux, ici S2 et S3, comportent un dispositif de traitement DT. Bien entendu, on peut envisager qu'au sein d'un même groupe plusieurs engins spatiaux, voire même tous, comportent un dispositif de contrôle D selon l'invention.

Un dispositif de contrôle D, selon l'invention, comprend au moins un ensemble constitué d'une antenne d'émission/réception A1, dite antenne principale, et de deux antennes réceptrices A2 et A3, dites antennes secondaires. Les trois antennes Aj (j = 1 à 3) d'un ensemble sont implantées en des endroits choisis sur une face F de l'engin spatial S1. Un exemple d'implantation d'un ensemble d'antenne sur une face F d'un engin spatial S1 est schématiquement illustré sur la figure 2.

Il est important de noter qu'un dispositif de contrôle D peut comprendre plusieurs ensembles de trois antennes Aj implantés sur des faces d'orientations différentes d'un même engin spatial S1. On peut également envisager qu'un dispositif de contrôle D comprenne au moins un ensemble de trois antennes Aj sur l'une de ses faces F, ainsi qu'au moins une autre antenne d'émission/réception A4, dite antenne complémentaire, sur l'une au moins de ses autres faces (comme c'est le cas dans l'exemple non limitatif illustré sur la figure 1).

Selon l'invention, chaque antenne principale A1 (et complémentaire A4) est capable d'émettre et recevoir des premiers et seconds signaux radiofréquences (RF), présentant des première f1 et seconde f2 fréquences choisies espacées d'un écart fréquentiel choisi f3 (avec f3 = f2 - f1). Par ailleurs, chaque antenne secondaire A2, A3 est capable de recevoir les premiers et seconds signaux radiofréquences.

Les première f1 et seconde f2 fréquences appartiennent de préférence à la bande S. Mais, cela n'est pas obligatoire. Elles peuvent en effet appartenir à des bandes de fréquences plus élevées que celles de la bande S, comme par exemple la bande SHF ou EHF.

L'écart fréquentiel f3 entre les première f1 et seconde f2 fréquences correspond préférentiellement à une longueur d'onde qui est plus longue que le double de la distance entre l'antenne principale A1 et chacune des antennes secondaires A2 et A3.

On considère ci-après que les première f1 et seconde f2 fréquences appartiennent à la bande S. Par exemple, f1 = 2,1 GHz et f2 = 2,2 GHz, ce qui donne un écart fréquentiel f3 = 100 MHz.

Chaque dispositif de traitement DT, équipant un engin spatial S2, S3 dépourvu de dispositif de contrôle D, comprend au moins une antenne d'émission/réception A1, capable d'émettre et recevoir les premiers et seconds signaux radiofréquences à destination des et en provenance d'autres engins spatiaux de son groupe.

Chaque dispositif de contrôle D comprend également un premier module de mesure MM et un second module de mesure M2.

Le premier module de mesure MM comprend par exemple une partie de type analogique pour traiter les signaux radiofréquences (RF) reçus et les convertir en signaux numériques, et une partie de type numérique dédiée plus précisément à l'acquisition et à la poursuite des signaux ainsi qu'à la production des mesures.

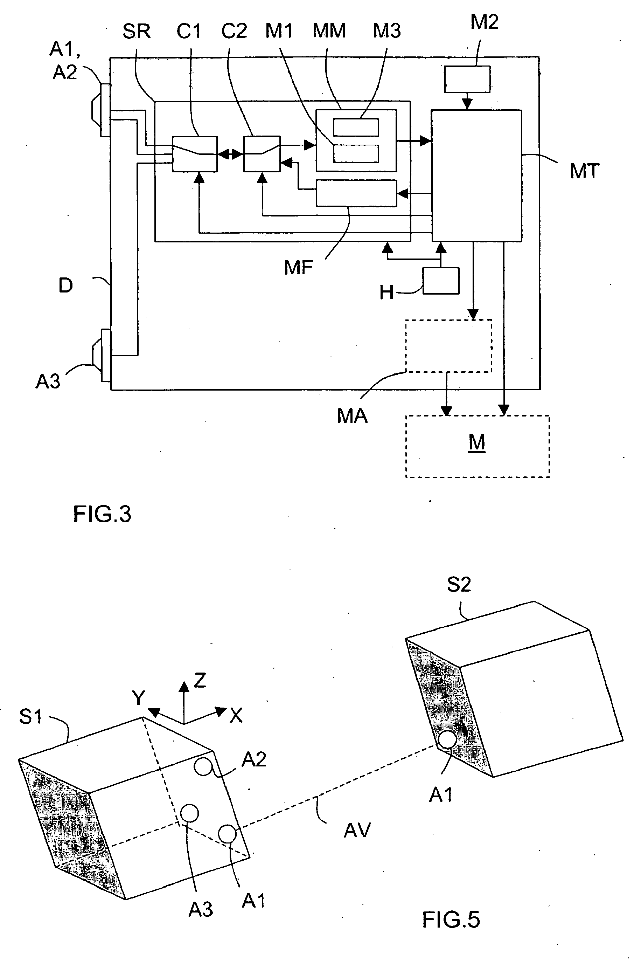

Comme cela est schématiquement illustré sur la figure 3, le premier module de mesure MM est par exemple couplé aux antennes Aj de chaque ensemble (ainsi qu'aux éventuelles antennes complémentaires A4) par l'intermédiaire de premier C1 et second C2 modules d'aiguillage.

Le premier module d'aiguillage C1 assure le couplage avec l'une ou l'autre des antennes en fonction d'instructions provenant d'un module de traitement MT sur lequel on reviendra plus loin.

Le second module d'aiguillage C2 est raccordé à une entrée/sortie du premier module d'aiguillage C1 et, d'une part, à l'entrée du module de mesure MM, et d'autre part, à la sortie d'un module MF de formation de premiers et seconds signaux (pour la partie transmission). Il permet donc le fonctionnement du dispositif de contrôle D soit en mode de réception de signaux, soit en mode d'émission de signaux en fonction d'instructions provenant du module de traitement MT.

Le dispositif de contrôle D comporte une horloge H qui représente son temps local et qui est utilisée pour générer les fréquences des porteuses et pour séquencer le code pseudo-aléatoire (sur lequel on reviendra plus loin). Elle fournit également des signaux d'horloge nécessaires au fonctionnement de certains au moins de ses constituants, et notamment nécessaires au contrôle de la transmission et de la réception.

Le premier module de mesure MM comprend au moins un premier sous-module de mesure M1 chargé de déterminer des premières DM1 et secondes DM2 différences de marche entre son antenne principale A1 et ses antennes secondaires A2 et A3, correspondant respectivement à la première fréquence f1 (ou la seconde fréquence f2) et à la fréquence f3 (égale à l'écart fréquentiel entre f1 et f2), à partir des premiers et seconds signaux reçus par chacune des antennes Aj d'un ensemble en provenance d'un autre engin spatial S2, S3 de son groupe.

Sur la figure 4 se trouve illustré schématiquement un exemple de différence de marche DM1, entre des antennes principale A1 et secondaire A2 d'un ensemble implanté sur la face F d'un engin spatial S1, de signaux émis par un engin spatial S2 du même groupe. Ici, DM1 = d1 - d2, d1 étant la distance séparant l'engin spatial S2 de l'antenne principale A1 de l'engin spatial S1, et d2 étant la distance séparant l'engin spatial S2 de l'antenne secondaire A2 de l'engin spatial S1.

De préférence, le premier sous-module de mesure M1 procède à la détermination des premières DM1 et secondes DM2 différences de marche, correspondant à la fréquence f3, comme indiqué ci-après.

Tout d'abord le premier sous-module de mesure M1 détermine les première et seconde phases respectivement des premiers et seconds signaux reçus par chacune des antennes Aj d'un ensemble en provenance d'un autre engin spatial S2 ou S3.

Chaque signal se présente au moins sous la forme d'une porteuse d'une fréquence f1 ou f2 choisie. L'une au moins des deux fréquences f1 et f2 est préférentiellement modulée par un code pseudo-aléatoire choisi, qui est nécessaire à la mesure de distance inter-engins spatiaux et à la synchronisation des périodes d'émission et de réception entre les engins spatiaux du groupe. Dans ce cas, le module de mesure MM est chargé d'acquérir le code pseudo-aléatoire et de le supprimer de la porteuse afin de permettre son analyse.

Par ailleurs, l'une au moins des deux porteuses peut être modulée par des données permettant aux engins spatiaux d'échanger des informations. Dans ce cas, le module de mesure MM assure également la fonction de démodulation de porteuse afin de permettre l'extraction des données d'information qu'elle contient.

La porteuse est ensuite analysée de manière connue de l'homme de l'art par le premier sous-module de mesure M1 afin de déterminer les premières et secondes mesures de phase. Selon la technique mise en oeuvre au sein du premier sous-module de mesure M1, on peut obtenir soit des premières et secondes mesures de phase pour chaque antenne Aj, qui sont ensuite soustraites pour obtenir des premières et secondes différences de phase entre l'antenne principale A1 et chacune des antennes secondaires A2 et A3, pour chacune des première f1 et secondes f2 fréquences, soit directement des premières et secondes différences de phase entre l'antenne principale A1 et chacune des antennes secondaires A2 et A3, pour chacune des première f1 et secondes f2 fréquences.

Puis, le premier sous-module de mesure M1 déduit des premières et secondes différences de phase des troisièmes différences de phase correspondant à la fréquence f3 (ou écart fréquentiel). Plus précisément, chaque troisième différence de phase est une phase qui correspond à un troisième signal « factice » construit artificiellement à partir de premier et second signaux reçus par l'une des antennes Aj et présentant une fréquence f3 égale à l'écart fréquentiel f2 - f1.

Ensuite, le premier sous-module de mesure M1 détermine, d'une part, deux premières différences de marche DM1 entre l'antenne principale A1 et l'antenne secondaire A2 à partir respectivement d'une première ou seconde différence de phase et d'une troisième différence de phase, et d'autre part, deux secondes différences de marche DM2 entre l'antenne principale A1 et l'antenne secondaire A3 à partir respectivement d'une première ou seconde différence de phase et d'une autre troisième différence de phase.

Le premier sous-module de mesure M1 est également chargé de déterminer des premières ΔDM1 et secondes ΔDM2 variations de différence de marche entre son antenne principale A1 et ses antennes secondaires A2 et A3 respectivement, correspondant à la première fréquence f1. Si les mesures de phase sont effectuées par exemple toutes les secondes, les différences de marche DM1 et DM2 sont produites toutes les secondes, et chaque variation ΔDM1, ΔDM2 représente la variation de la différence de marche correspondante DM1, DM2 pendant la seconde écoulée.

Ces mesures de variation de différence de marche ΔDM1 et ΔDM2 sont des mesures non ambiguë.

Le second module de mesure M2 est chargé de mesurer l'attitude de l'engin spatial S1, afin de délivrer, au moins, des mesures représentatives de chaque rotation subie par ledit engin spatial S1. Il est indépendant du module de mesure MM, chargé de traiter les signaux radiofréquences. Il s'agit par exemple d'un traqueur d'étoile.

Chaque dispositif de contrôle D comprend également un module de traitement MT chargé d'effectuer au moins les quatre tâches décrites ci-après.

Une première tâche du module de traitement MT consiste à estimer de façon grossière la direction de transmission (ou axe à vue) AV des signaux, qui sont émis par un autre engin spatial S2, à partir de première DM1 et seconde DM2 différences de marche initiales.

L'axe à vue AV est un vecteur unitaire (par exemple longueur égale à un mètre) dont deux des coordonnées sont directement les différences de marche DM1 et DM2, si l'on considère un repère dont un premier axe (Z, voir figures 2 et 5) lie les antennes principale A1 et secondaire A2, un deuxième axe (Y) lie les antennes principale A1 et secondaire A3, et un troisième axe (X) est perpendiculaire aux deux autres axes (Y et Z). La troisième coordonnée est sans valeur car le vecteur AV est normé. Il est important de noter que lorsque la distance entre antennes n'est pas égale à un mètre, les coordonnées sont déterminées à partir de différences de marche normalisées par les distances entre antennes.

Cette mesure est dite grossière car l'erreur de mesure sur les premières DM1 et secondes DM2 différences de marche est amplifiée dans le rapport des longueurs d'onde lorsque l'on construit la mesure sur l'écart fréquentiel f3.

Une deuxième tâche du module de traitement MT consiste à ordonner une manoeuvre de l'engin spatial hôte S1 de manière à ce que l'axe choisi (X), nominalement celui qui est normal aux directions A1A2 (Z) et A1A3 (Y) soit sensiblement aligné par rapport à la direction de transmission (ou axe à vue) AV estimé(e) de façon grossière lors de la première tâche. Pour ce faire, le module de traitement MT calcule la consigne d'attitude que doit avoir l'engin spatial hôte S1 compte tenu de la position de l'axe choisi (X) par rapport à la direction de transmission (ou axe à vue) AV estimé (e) de façon grossière, puis il adresse cette consigne au module de contrôle MD de l'engin spatial hôte S1. Une stratégie différente consiste à calculer une consigne de position relative qui conduit à une manoeuvre de déplacement latéral de l'un des deux engins spatiaux plutôt qu'à une manoeuvre de rotation de l'engin spatial hôte S1. Le choix entre ces deux stratégies dépend de paramètres extérieurs liés à la mission.

Sur la figure 5 se trouve illustré un exemple d'alignement de l'axe X, du référentiel (X, Y, Z) attaché à l'engin spatial S1, par rapport à l'axe à vue estimé et grossier AV, défini par rapport à l'engin spatial S2. A ce stade, la précision de l'axe à vue estimé étant moyenne, l'alignement peut donc n'être qu'approximatif.

Cette deuxième tâche se poursuit de préférence par l'annulation, si possible complète, des mouvements relatifs de l'engin spatial hôte S1 et de l'autre engin spatial S2. L'objectif est ici d'annuler les vitesses relatives latérales des deux engins spatiaux S1 et S2 afin de les maintenir dans une configuration relative fixe.

Pour ce faire, le module de traitement MT utilise les mesures de variation des différences de marche de la première porteuse de fréquence f1 ou de la seconde porteuse de fréquence f2. La différence de marche de la première porteuse de fréquence f1 (ou de la seconde porteuse de fréquence f2) est ambiguë et précise, mais sa variation dans le temps n'est pas ambiguë, elle constitue donc une mesure de vitesse de l'axe à vue intéressante. En effet, pour pouvoir annuler la vitesse relative des deux engins spatiaux, il faut disposer d'une mesure de vitesse précise. Une difficulté vient du fait que l'on ne dispose que de deux coordonnées précises de la vitesse de l'axe à vue (vitesse de sa coordonné DM1 et vitesse de sa coordonné DM2) alors que ce vecteur vitesse est de dimension trois. Toutefois, on peut montrer que la troisième coordonnée est négligeable si l'axe à vue est proche de la normale aux directions A1A2 et A1A3, ce qui justifie l'étape précédente consistant à aligner grossièrement l'axe à vue AV et la normale aux directions A1 A2 et A1 A3.

A partir des mesures de vitesse de l'axe à vue AV, le module de traitement MT calcule les manoeuvres à réaliser pour quasi-annuler la vitesse de l'axe à vue AV. Les manoeuvres peuvent être réalisées par une modification de la vitesse de déplacement de l'engin spatial S1 ou par une modification de la vitesse de déplacement de l'engin spatial S2 ou par une modification de la vitesse de rotation de l'engin spatial S1 ou encore par une combinaison de ces modifications. La stratégie choisie dépend de paramètres extérieurs liés à la mission. Si la manoeuvre doit être effectuée par l'engin spatial S1, le module de traitement MT dialogue avec le module de contrôle MD de son engin spatial S1. Si la manoeuvre doit être effectuée par l'engin spatial S2, la transmission des instructions à l'engin spatial distant S2 se fait par exemple au moyen de l'antenne principale A1, par exemple en utilisant des premiers et/ou seconds signaux.

Une troisième tâche du module de traitement MT consiste à ordonner au moins un entraînement en rotation, choisi, de l'engin spatial S1 autour de l'axe choisi, ici X, et donc sensiblement autour de l'axe à vue AV estimé grossièrement. Cette rotation est mesurée avec précision par le second module de mesure M2. La valeur de l'angle de rotation n'est pas critique : la rotation doit avoir une amplitude suffisante pour atteindre la précision requise par la quatrième tâche du module de traitement MT (typiquement quelques dizaines de degrés).

Pendant cette rotation, le module de traitement MT enregistre, grâce à son premier sous-module de mesure M1, la variation des différences de marche $\Delta$DM1 et $\Delta$DM2 sur la première porteuse présentant la fréquence f1 ou sur la seconde porteuse présentant la fréquence f2.

Une quatrième tâche du module de traitement MT consiste à estimer précisément l'axe à vue entre les engins spatiaux S1 et S2, à partir de la mesure de rotation délivrée par le second module de mesure M2 (dédié à l'attitude) et des mesures des variations des différences de marche $\Delta$DM1 et $\Delta$DM2 sur la première porteuse présentant la fréquence f1 ou sur la seconde porteuse présentant la fréquence f2, délivrées par le premier sous-module de mesure M1.

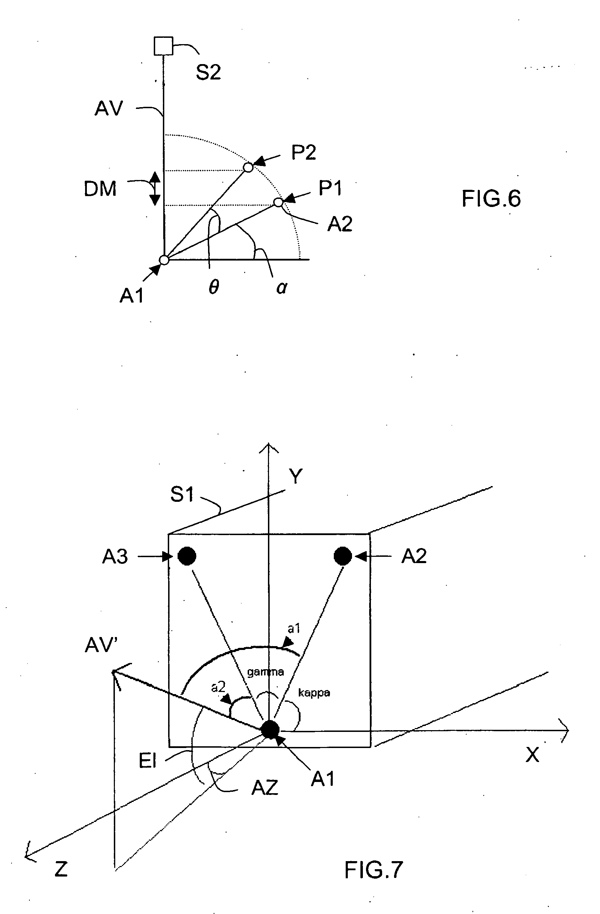

Cette procédure d'estimation précise d'un axe à vue va maintenant être décrite en détail ci-après en référence à un exemple non limitatif illustré sur les figures 6 et 7. Dans ce qui suit on désigne par AV l'axe à vue estimé de façon grossière (avant rotation) et par AV' l'axe à vue estimé précisément.

La figure 6 illustre en deux dimensions une rotation de l'engin spatial S1 par rapport à l'axe normal à l'axe à vue AV (déterminé grossièrement). Ici, seul a été représenté le déplacement de l'antenne secondaire A2 d'une position initiale P1 (avant rotation) à une position finale P2 (après rotation d'un angle θ). Cet angle de rotation θ est précisément mesuré par le second module de mesure (d'attitude) M2, par exemple de type traqueur d'étoile. La rotation d'angle θ introduit une variation de la première différence de marche DM1 entre les antennes principale A1 et secondaire A2, qui est déterminée par le module de traitement MT à partir des premières mesures de différence de marche initiale (avant rotation) et complémentaire (après rotation) délivrées par le premier sous-module de mesure M1. Connaissant la distance BL1 séparant les antennes principale A1 et secondaire A2 et la variation de la première différence de marche DM1 (selon la première porteuse présentant la fréquence f1 ou la seconde porteuse présentant la fréquence f2), on en déduit l'angle initial α de la désorientation de la direction A1A2 (Z) par rapport à l'axe à vue AV'. On effectue les mêmes opérations entre l'antenne principale A1 et l'autre antenne secondaire A3, et l'on déduit de l'ensemble des résultats les coordonnées précises définissant l'axe à vue AV'.

On notera que cet exemple bidimensionnel (2D) n'est pas complètement représentatif du cas réel à trois dimensions (3D). Dans le cas réel, on peut montrer qu'une seule rotation autour de l'axe (X), normal aux directions A1A2 (Z) et A1A3 (Y), suffit pour déterminer l'axe à vue précis AV' (S1S2) dans un repère attaché à l'engin spatial S1.

Un modèle plus sophistiqué que celui bidimensionnel est décrit ci-après en référence à la figure 7. On utilise ici l'axe Z d'un référentiel (X, Y, Z), attaché à l'engin spatial S1, pour pointer vers l'engin spatial S2. L'axe Z définit ici l'axe qui a été aligné par rapport à l'axe à vue grossier AV.

Sur la figure 7, la référence AZ représente l'azimut de l'axe à vue précis AV' par rapport à l'axe Z et la référence EL représente l'élévation de l'axe à vue précis AV' par rapport au plan ZX.

On cherche tout d'abord à déterminer la relation existant entre l'angle de rotation θ de l'engin spatial S1 autour de l'axe Z, les variations de différence de marche et les coordonnées de l'axe à vue grossier AV (avant la rotation). En présence de signaux incidents parallèles, on peut montrer que la différence de marche peut être définie comme étant la projection sur l'axe à vue AV du vecteur A1A2.

Par conséquent, si l'on note BL1 le vecteur entre les antennes principale A1 et secondaire A2 et $V_{LoS}$ le vecteur unitaire de l'axe à vue grossier AV, on a la relation suivante :

$$DM1 = \left\langle \vec{BL1} \middle| \vec{V}_{LoS} \right\rangle$$

Dans le référentiel (X, Y, Z) attaché à l'engin spatial S1, le vecteur unitaire $V_{LoS}$ (qui définit les coordonnées de l'axe à vue précis AV' que l'on veut estimer) est défini comme indiqué ci-dessous :

$$\vec{V}_{LoS} = \begin{vmatrix} \dot{X} \\ Y \\ Z = \sqrt{1 - X^2 - Y^2} \end{vmatrix}$$

Les coordonnées des deux antennes secondaires A2 et A3 dans le référentiel précité sont bien connues et données ci-dessous :

$$BL1 = \begin{vmatrix} x_1 \\ y_1 \\ z_1 \end{vmatrix} \text{ et } BL2 = \begin{vmatrix} x_2 \\ y_2 \\ z_2 \end{vmatrix}$$

Avant la rotation d'angle θ, les première DM1 et seconde DM2 différences de marche sont données par les relations suivantes :

$$DM1 = \left\langle \vec{BL1} \middle| \vec{V}_{LoS} \right\rangle$$

$$DM2 = \left\langle \vec{BL2} \middle| \vec{V}_{LoS} \right\rangle$$

Après la rotation d'angle θ (qui est définie par une matrice de rotation Rot (θ), les vecteurs BL1(θ) et BL2(θ) représentant respectivement les distances entre l'antenne principale A1 et les antennes secondaires A2 et A3, dans le référentiel précité, sont données par les relations suivantes :

$$BL1(\theta) = Rot(\theta) \begin{vmatrix} x_1 \\ y_1 \\ z_1 \end{vmatrix} \text{ et } BL2(\theta) = Rot(\theta) \begin{vmatrix} x_2 \\ y_2 \\ z_2 \end{vmatrix}$$

Par conséquent, les première DM1(θ) et seconde DM2(θ) différences de marche complémentaires sont données par les relations suivantes :

$$DM1(\theta) = \left\langle Rot(\theta).\vec{BL1} \middle| \vec{V}_{LoS} \right\rangle$$

$$DM2(\theta) = \left\langle Rot(\theta).\vec{BL2} \middle| \vec{V}_{LoS} \right\rangle$$

Les variations des première et seconde différences de marche (correspondant la fréquence choisie f1 ou f2) peuvent alors s'écrire :

$$\Delta DM1(\theta) = \left\langle Rot(\theta).B\vec{L}1 \middle| \vec{V}_{LoS} \right\rangle - \left\langle B\vec{L}1 \middle| \vec{V}_{LoS} \right\rangle = \left\langle [Rot(\theta) - Id]B\vec{L}1 \middle| \vec{V}_{LoS} \right\rangle$$

$$\Delta DM2(\theta) = \left\langle Rot(\theta).B\vec{L}2 \middle| \vec{V}_{LoS} \right\rangle - \left\langle B\vec{L}2 \middle| \vec{V}_{LoS} \right\rangle = \left\langle [Rot(\theta) - Id]B\vec{L}2 \middle| \vec{V}_{LoS} \right\rangle$$

En empruntant la notation matricielle suivante :

$$\Delta DM = \begin{bmatrix} \Delta DM1 \\ \Delta DM2 \end{bmatrix}$$

on a alors la relation suivante, où l'exposant signale un élément matriciel transposé :

$$\Delta DM = \begin{bmatrix} [(Rot(\theta) - Id)BL1]^t \\ [(Rot(\theta) - Id)BL2]^t \end{bmatrix}.V_{LoS} = \begin{bmatrix} BL1' \\ BL2' \end{bmatrix}[Rot(\theta) - Id]^t V_{LoS}$$

Cette dernière expression n'étant pas facilement inversable du fait que son premier terme (BL1$^t$, BL2$^t$) représente une matrice de type 2x3, on se ramène alors à deux dimensions au lieu de trois. Cela peut se faire en mettant à profit le fait, d'une part, que le vecteur V$_{LoS}$ est unitaire et que sa coordonnée Z n'a donc pas d'intérêt car elle se déduit de ses coordonnées X et Y, et d'autre part, que l'on effectue la rotation d'angle θ autour de l'axe Z. Par conséquent, la formule précédente peut se réécrire en deux dimensions (dans le plan X, Y) comme indiqué ci-dessous :

$$V_{LoS\_2D} = [Rot(-\theta_z) - Id]^{-1} \begin{bmatrix} BL1_{2D}' \\ BL2_{2D}' \end{bmatrix}^{-1} \Delta DM$$

Une fois que le module de traitement MT est en possession des coordonnées de l'axe à vue (grossières avant la rotation), il peut désormais connaître à tout moment les coordonnées précises de cet axe à vue en intégrant les variations de différence de marche ΔDM1 et ΔDM2. Une variante consiste à utiliser la connaissance de l'axe à vue précis AV' pour lever l'ambiguïté sur les mesures DM1 et DM2 effectuées sur la première fréquence f1 (ou la seconde fréquence f2), puis à entretenir l'ambiguïté à partir des variations de différence de marche ΔDM1 et ΔDM2.

Si il y d'autres engins spatiaux (par exemple S3) équipés d'un dispositif DT, la même procédure peut être répétée entre les engins spatiaux S1 et S3 pour mesurer précisément l'axe à vue S1S3 dans le repère attaché à l'engin spatial S1. Pendant le déroulement de cette procédure entre les engins spatiaux S1 et S3, il faut veiller à ce que l'engin spatial S2 reste en visibilité de l'engin spatial S1. En effet, si la liaison RF est rompue entre les engins spatiaux S1 et S2, la connaissance de l'axe à vue précis AV' (S1S2) risque de se perdre et il faut recommencer la procédure entre les engins spatiaux S1 et S2.

Si il y a au moins un autre engin spatial (par exemple S4) équipé d'un dispositif D, l'engin spatial S4 peut lui-même déterminer précisément l'axe à vue des autres engins spatiaux dans son propre repère en effectuant cette même procédure. L'intérêt de doter plusieurs engins spatiaux du groupe du dispositif D au lieu du dispositif DT dépend de la mission.

Une fois que l'axe à vue est connu avec précision, cette précision peut être encore améliorée si une cartographie tabulée des multi-trajets a été effectuée préalablement et stockée sous forme de données cartographiques. Dans ce cas le module de traitement MT soustrait la contribution connu des multi-trajets aux mesures de différences de marche sur les signaux présentant la première fréquence f1. Cette technique est particulièrement efficace quand les multi-trajets sont causés par des réflexions locales à l'engin spatial hôte. Dans ce cas, l'erreur due aux multi-trajets est entièrement liée à la direction d'arrivée du signal.

On notera que les formules matricielles données ci-avant sont simplifiées afin d'en faciliter la compréhension. Dans la réalité, plusieurs effets secondaires peuvent les complexifier :

- une vitesse résiduelle peut subsister à la fin de la phase d'annulation de la vitesse latérale,
- la rotation ordonnée par le module de traitement MT peut différer de la rotation réellement effectuée par l'engin spatial, notamment l'axe de rotation réel peut être faussé par rapport à l'axe perpendiculaire aux directions A1A2 et A1A3,
- les ondes radiofréquences reçues par les différentes antennes Aj ne sont pas parfaitement parallèles si la distance entre les engins spatiaux S1 et S2 n'est pas très grande par rapport à la distance entre les antennes A1, A2 et A3.

Toutefois, ces effets peuvent être corrigés par l'homme de l'art en complexifiant les formules à partir des formules simplifiées.

Indépendamment de la mesure de l'axe à vue précis AV', les dispositifs D et DT peuvent être agencés de manière à mesurer la distance séparant les engins spatiaux.

Pour ce faire, le dispositif de contrôle D doit comprendre, de préférence dans son premier module de mesure MM, un second sous-module de mesure M3. Ce dernier est plus précisément chargé d'estimer chaque distance séparant son engin spatial S1 d'un autre engin spatial S2 du même groupe à partir au moins des premiers et/ou des seconds signaux reçus par l'une au moins des antennes, et de préférence par une antenne d'émission/réception A1 (ou A4), et provenant de cet autre engin spatial S2.

On considère dans ce qui suit, à titre d'exemple illustratif et non limitatif, que le second sous-module de mesure M3 estime les distances inter-engins spatiaux à partir des premiers signaux reçus par l'antenne principale A1.

En raison des biais temporels introduits par l'absence de synchronisation entre les horloges H des engins spatiaux S1 et S2, le second sous-module de mesure M3 effectue de préférence son estimation de distance à partir non seulement des premiers signaux qui sont reçus par l'antenne principale A1 en provenance de l'autre engin spatial S2, mais également de signaux auxiliaires qui sont transmis par cet autre engin spatial S2.

Comme indiqué précédemment, ces signaux auxiliaires consistent préférentiellement en une modulation de la porteuse du premier signal au moyen d'un code pseudo-aléatoire choisi, ainsi qu'éventuellement de données d'informations, de manière à ce que le signal émis soit l'image du temps local de l'engin spatial émetteur et que l'observation de ce signal permette d'obtenir une mesure de pseudo-distance.

En confrontant sa propre mesure de pseudo-distance à celle transmise par l'autre engin spatial S2 sous forme de données d'information dans les signaux auxiliaires, le second sous-module de mesure M3 peut isoler le biais d'horloge et connaître la distance inter-engins spatiaux d(S1, S2). En effet, la distance vraie est égale à la demi-somme de la pseudo-distance mesurée par l'engin spatial S1 sur le premier signal émis par l'engin spatial S2 et de la pseudo-distance mesurée par l'engin spatial S2 sur le premier signal émis par l'engin spatial S1.

La mesure de distance obtenue par l'analyse du code pseudo-aléatoire est non ambiguë mais de précision médiocre car la longueur d'onde du code pseudo-aléatoire est usuellement beaucoup plus grande que celle de la porteuse. Si la précision de la mesure de distance obtenue par l'observation du code pseudo-aléatoire est meilleure que la moitié de la longueur d'onde de la fréquence f3 alors cette mesure de distance approximative permet de lever l'ambiguïté sur la mesure de distance obtenue à partir des mesures de phase sur la fréquence f3 (effectuées sur les antennes principales des engins spatiaux S1 et S2). On obtient ainsi une mesure de distance de meilleure qualité que celle obtenue à partir du code pseudo-aléatoire. Toutefois, la qualité de cette mesure de distance est encore trop mauvaise pour pouvoir résoudre l'ambiguïté sur la mesure de distance obtenue à partir des mesures de phase de la fréquence, car la précision des mesures de phase sur f3 est dégradée dans le rapport des longueurs d'ondes f3/f1.

On prévoit alors une dernière étape afin d'atteindre une précision centimétrique sur la mesure de distance. Pour ce faire on combine de préférence trois techniques.

Une première technique consiste à lisser les bruits de mesure. Cette première technique, bien connue de l'homme de l'art, consiste plus précisément à filtrer une quantité non ambiguë mais fortement bruitée par sa vitesse de variation, si celle-ci est connue de façon peu bruitée. Ici, on lisse la mesure de distance, obtenue à partir du code pseudo-aléatoire, par la vitesse obtenue à partir de la variation des mesures de phase sur le premier signal (f1). Puis, on lisse la mesure de distance, obtenue à partir des mesures de phase sur l'écart fréquentiel f3, par la vitesse obtenue à partir de la variation des mesures de phase sur le premier signal (f1). Le but est de réduire le bruit sur la distance. Cette technique permet de réduire le bruit de mesure, mais il ne réduit pas les erreurs de type « biais lentement variable » qui résultent des multi-trajets et de la propagation des signaux dans l'électronique de réception et d'émission des signaux.

Une deuxième technique consiste à corriger l'effet de la propagation (délai de propagation et déphasage de propagation) dans l'électronique d'émission et de réception, par auto-calibration. Une fraction de l'amplitude de tous les signaux qui sont envoyés par le module SR vers l'antenne principale A1 est alors redirigée dans le module SR.

L'analyse de ces signaux dans le module de mesure MM permet de mesurer précisément la quantité correspondant à la propagation dans l'électronique d'émission de l'engin spatial S1 et à la propagation dans l'électronique de réception de l'engin spatial S1. La même technique est utilisée dans l'engin spatial S2 pour mesurer la quantité correspondant à la propagation dans l'électronique d'émission de l'engin spatial S2 et à la propagation dans l'électronique de réception de l'engin spatial S2.

Chacune de ces deux quantités isolées n'a pas d'intérêt, mais la somme de ces deux quantités peut se réécrire comme la somme de la propagation électronique du chemin S1 vers S2 et de la propagation électronique du chemin S2 vers S1. Cette somme permet alors de corriger la distance puisque celle-ci est le résultat de la somme de la pseudo-distance entre l'engin spatial S1 et l'engin spatial S2 et de la pseudo-distance entre l'engin spatial S2 et l'engin spatial S1.

Cette correction a autant de composantes que le nombre de composantes dans les signaux transmis (propagation du code pseudo-aléatoire, propagation de la porteuse de fréquence f1 et propagation de la porteuse de fréquence f2). Elle permet donc de corriger la distance obtenue par le code pseudo-aléatoire et les distances obtenues sur les porteuses de fréquences f1, f2 et f3.

Une troisième technique consiste à corriger l'effet des multi-trajets en utilisant une cartographie tabulée de ces multi-trajets sur l'engin spatial S1 et sur l'engin spatial S2. L'utilisation d'une telle cartographie nécessite de connaître précisément l'axe à vue AV' (S1S2) dans un repère attaché à S1 (ce qui se fait au moyen de la méthode décrite ci-avant). Elle nécessite également de connaître l'axe à vue S2S1 dans un repère attaché à S2, ce qui peut être obtenu soit parce que S2 est doté d'un dispositif D, soit parce qu'il est doté d'un dispositif DT augmenté d'un senseur d'attitude. En effet, on peut montrer que la connaissance de l'axe à vue AV' (S1S2) dans un repère attaché à S1 et la connaissance de l'attitude de l'engin spatial S2 suffisent pour connaître l'axe à vue S2S1 dans un repère attaché à l'engin spatial S2.

Connaissant l'estimée précise de la distance inter-engins spatiaux d(S1, S2) ou d(S1, S3) et l'estimée précise des coordonnées de l'axe à vue correspondant AV1 ou AV2, le module de traitement MT connaît alors les positions relatives des deux engins spatiaux S2 et S3 par rapport au référentiel (X, Y, Z) qui est attaché à son engin spatial S1 (ou bien tout autre référentiel attaché à l'engin spatial S1).

Comme cela est illustré sur la figure 3 à titre d'exemple non limitatif, le dispositif de contrôle D peut également comprendre un module d'analyse MA chargé de contrôler les engins spatiaux du groupe pour les amener et les maintenir dans la configuration géométrique requise par la mission et pour décider de toute manoeuvre d'évitement en cas de détection d'un risque de collision entre engins spatiaux. Tout type de contrôle de la position des engins spatiaux du groupe et de détection de risque de collision connu de l'homme de l'art peut être mis en oeuvre à ce stade.

Chaque fois qu'il détecte un risque de collision, le module d'analyse MA peut également et éventuellement déterminer une manoeuvre d'évitement pour son engin spatial S1 en fonction des positions relatives des autres engins spatiaux du groupe.

Le dispositif de contrôle D selon l'invention, et notamment son module de traitement MT, ses premier MM et second M2 modules de mesure, et son éventuel module d'analyse MA, peuvent être réalisés sous la forme de circuits électroniques, de modules logiciels (ou informatiques), ou d'une combinaison de circuits et de logiciels.

Au sein du dispositif de contrôle D, le premier module de mesure MM, les modules d'aiguillage C1 et C2, le module de formation de faisceau MF, ainsi qu'éventuellement le second module de mesure (d'attitude) M2, peuvent être réunis dans une entité constituant un senseur bifréquences SR.

Lorsque l'invention fonctionne en bande S, on peut utiliser des antennes non directives, et par conséquent on peut d'obtenir une précision centimétrique sur les positions relatives d'engins spatiaux volant en formation, quelles que soient leurs positions relatives initiales, et notamment lorsque les axes à vue sont initialement inclinés faiblement ou fortement.

Par ailleurs, l'invention peut servir à alimenter avec des positions relatives précises des dispositifs de contrôle de l'art antérieur fonctionnant par exemple en SHF ou EHF ou à base de signaux optiques et nécessitant un pré-positionnement précis pour pouvoir déterminer les positions relatives des engins spatiaux avec une précision encore plus grande, typiquement un ou plusieurs ordres de grandeur en plus.

L'invention ne se limite pas aux modes de réalisation de dispositif de contrôle et d'engin spatial décrits ci-avant, seulement à titre d'exemple, mais elle englobe toutes les variantes que pourra envisager l'homme de l'art dans le cadre des revendications ci-après.

**Revendications**

1. Dispositif de contrôle (D), pour un engin spatial (Si) d'un groupe d'engins spatiaux destiné à se déplacer selon une formation choisie, comprenant :

    - au moins un ensemble constitué d'une antenne d'émission/réception (A1) et de deux antennes réceptrices (A2, A3) implantées en des endroits choisis sur une face dudit engin spatial (Si) et propres à émettre et/ou recevoir des signaux radiofréquences, chaque antenne (A1-A3) dudit ensemble étant agencée pour émettre et/ou recevoir des premiers et seconds signaux présentant des première et seconde fréquences choisies espacées d'un écart fréquentiel choisi,
- des moyens de traitement (MT) agencés pour estimer les directions de transmission des signaux émis par les autres engins spatiaux du groupe à partir desdits signaux reçus par lesdites antennes (A1-A3), chaque antenne (A1-A3) dudit ensemble
- des premiers moyens de mesure (M1) agencés pour déterminer des premières et secondes différences de marche entre antennes (A1-A3) correspondant à la première ou seconde fréquence et audit écart fréquentiel, à partir des premiers et seconds signaux reçus par chacune desdites antennes dudit ensemble en provenance d'un autre engin spatial (Si') dudit groupe,
- des moyens de mesure d'attitude (M2) agencés pour délivrer des mesures de rotation subie par ledit engin spatial (Si),
- lesdits moyens de traitement (MT) sont agencés pour a) estimer grossièrement la direction de transmission des signaux émis par ledit autre engin spatial (Si') à partir de première et seconde différences de marche dites initiales, b) ordonner un positionnement grossier dudit engin spatial (Si), **caractérisé en ce que** le positionnement grossier dudit engin spatial est réalisé de sorte qu'un axe choisi (X) d'un référentiel attaché audit engin spatial soit sensiblement aligné par rapport à ladite direction de transmission estimée grossièrement, et **en ce que** lesdits moyens de traitement (MT) sont agencés pour c) ordonner au moins un entraînement en rotation choisi dudit engin spatial (Si) autour dudit axe choisi (X), d) estimer précisément ladite direction de transmission des signaux émis par ledit autre engin spatial (Si') à partir de la mesure de rotation délivrée par lesdits moyens de mesure d'attitude (M2) et d'une mesure de variation de la première ou seconde différence de marche induite par ladite rotation, effectuée par lesdits premiers moyens de mesure (M1).

2. Dispositif selon la revendication 1, **caractérisé en ce que** lesdits moyens de traitement (MT) sont agencés, avant d'ordonner ledit entraînement en rotation, pour générer des instructions destinées à ordonner une stabilisation du positionnement grossier à vitesse quasi-nulle dudit engin spatial (Si), à partir de ladite mesure de variation de l'une des première et seconde différences de marche effectuée par lesdits premiers moyens de mesure (M1).

3. Dispositif selon l'une des revendications 1 ou 2, **caractérisé en ce que** lesdits moyens de traitement sont agencés pour entretenir une connaissance précise de ladite direction de transmission, à partir desdites mesures de variation de l'une des première et seconde différences de marche.

4. Dispositif selon l'une des revendications 1 à 3, **caractérisé en ce que** lesdits premiers moyens de mesure (M1) sont agencés pour i) déterminer les première et seconde phases des premiers et seconds signaux reçus par chacune desdites antennes (A1-A3) dudit ensemble en provenance dudit autre engin spatial (Si'), ii) déduire desdites premières et secondes phases des premières et secondes différences de phase entre ladite antenne d'émission/réception (A1 et chacune desdites antennes réceptrices (A2, A3), iii) déduire desdites premières et secondes différences de phase des troisièmes différences de phase correspondant audit écart fréquentiel, iv) déduire de premières ou secondes différences de phase consécutives et de troisièmes différences de phase consécutives des mesures de variation de première ou seconde différence de marche, et v) déduire des mesures de variation de première ou seconde différence de marche des mesures non ambiguë desdites première et seconde différences de marche correspondant à la première ou seconde fréquence.

5. Dispositif selon l'une des revendications 1 à 4, **caractérisé en ce qu'**il comprend des seconds moyens de mesure (M3) agencés pour estimer la distance séparant leur engin spatial (Si) dudit autre engin spatial (Si') du groupe, à partir desdits premiers et/ou seconds signaux reçus par au moins l'une desdites antennes (A1-A3) en provenance dudit autre engin spatial (Si'), et **en ce que** lesdits moyens de traitement (MT) sont agencés pour déterminer les positions relatives desdits engins spatiaux (Si') par rapport à leur engin spatial (Si), à partir desdites distances estimées et de ladite direction de transmission estimée précise.

6. Dispositif selon la revendication 5, **caractérisé en ce que** lesdits seconds moyens de mesure (M3) sont agencés pour estimer la distance séparant leur engin spatial (Si) dudit autre engin spatial (Si') du groupe, à partir desdits premiers et/ou seconds signaux reçus par au moins l'une desdites antennes (A1-A3) en provenance dudit autre engin spatial (Si'), et de signaux auxiliaires transmis par ledit autre engin spatial (Si') et représentatifs de la distance le séparant dudit engin spatial (Si).

7. Dispositif selon l'une des revendications 5 ou 6, **caractérisé en ce que** lesdits moyens de traitement (MT) sont agencés pour corriger ladite mesure de distance et/ou ladite mesure de direction de transmission précise d'un effet induit par des multi-trajets, à partir de données cartographiques stockées et de ladite direction de transmission des signaux.

8. Dispositif selon l'une des revendications 1 à 7, **caractérisé en ce qu'**il comprend au moins deux ensembles d'antennes sur au moins deux faces d'orientations différentes.

9. Dispositif selon l'une des revendications 1 à 8, **caractérisé en ce qu'**il comprend au moins une antenne d'émission/réception complémentaire (A4) sur au moins une face dépourvue d'ensemble d'antennes.

10. Dispositif selon l'une des revendications 1 à 9, **caractérisé en ce que** lesdites antennes (A1 -A3) sont propres à émettre et/ou recevoir des premiers et seconds signaux radiofréquences se présentant sous la forme de première et seconde porteuses dont l'une au moins est modulée par un code pseudo-aléatoire choisi.

11. Dispositif selon l'une des revendications 1 à 10, **caractérisé en ce que** ledit écart fréquentiel correspond à une longueur d'onde de longueur au moins égale au double de la distance séparant ladite antenne d'émission/réception (A1) de chacune desdites antennes réceptrices (A2, A3).

12. Dispositif selon l'une des revendications 1 à 11, **caractérisé en ce que** lesdites antennes (A1-A3) sont agencées pour émettre/recevoir des premières et secondes porteuses présentant des première et seconde fréquences appartenant à une bande de fréquences choisie dans un groupe comprenant les bandes S, SHF et EHF.

13. Dispositif selon la revendication 12, **caractérisé en ce que** ladite bande de fréquence est la bande S.

14. Engin spatial (S1) destiné à se déplacer en formation au sein d'un groupe d'engins spatiaux, **caractérisé en ce qu'**il comprend un dispositif de contrôle (D) selon l'une des revendications précédentes.

15. Groupe d'engins spatiaux (Si), destiné à se déplacer selon une formation choisie, **caractérisé en ce que** l'un au moins desdits engins spatiaux (S1) comprend un dispositif de contrôle (D) selon l'une des revendications 1 à 13, et **en ce que** certains au moins des autres engins spatiaux (S2, S3) comportent au moins une antenne d'émission/réception (A1) implantée sur au moins une face choisie.

## Claims

1. Control device (D) for a space craft (SI) in a group of space craft designed to move within a chosen formation, comprising:

      - at least one assembly comprising one transmitter/receiver antenna (A1) and two receiver antennae (A2, A3) installed in the chosen areas on a surface of said spacecraft (Si) and capable of transmitting and/or receiving radio frequency signals, each antenna (A1-A3) of said assembly being arranged to transmit and/or receive the first and second signals having the first and second chosen frequencies separated by a chosen frequency deviation,
      - processing means (MT) arranged to estimate the transmission directions of the signals emitted by the other spacecraft in the group from said signals received from said antennae (A1-A3), each antenna (A1-A3) of said assembly,
      - first measuring means (M1) arranged to determine the first and second operation differences between antennae (A1-A3) corresponding to the first or second frequency and said frequency deviation, from the first and second signals received by each antenna of said assembly and originating from another spacecraft (Si') of said group,
      - means for measuring attitude (M2) arranged to provide the measurement of a rotation carried out by said space craft (Si),
      - said processing means (MT) arranged a) to roughly estimate the transmission direction of the signals emitted by said other spacecraft (Si') from the first and second operation differences, referred to as initial differences, b) to cause a rough positioning of said spacecraft (Si), **characterised in that** the rough positioning of said spacecraft is achieved in such a way that a chosen axis (X) of a reference attached to said spacecraft is essentially aligned in relation to said roughly estimated transmission direction, and **in that** said processing means (MT) are arranged c) to cause at least one chosen rotation of said spacecraft (Si) around said chosen axis (X), d) to accurately estimate said transmission direction of the signals emitted by said other spacecraft (Si') from the rotation measurement supplied by said means for measuring attitude (M2) and a variation measurement, as performed by said first measuring means (M1), for the first or second operation difference induced by said rotation.

2.  Device according to claim 1, **characterised in that** said processing means (MT) are designed to generate, before causing said rotation, the instructions for causing a stabilisation of the rough positioning at a quasi-zero speed of said space craft (SI) from said variation measurement, as performed by said first measuring means (M1), of one of the first and second operation differences.

3.  Device according to claim 1 or 2, **characterised in that** said processing means are arranged to provide continuous precise information for said transmission direction from said variation measurements of one of the first and second operation differences.

4.  Device according to one of claims 1 to 3, **characterised in that** said first measuring means (M1) are arranged i) to determine the first and second phases of the first and second signals received by each of said antenna (A1-A3) of said assembly and originating from said other spacecraft (Si'), ii) to derive said first and second phases of the first and second phase differences between said transmitter/receiver antenna (A1) and each of said receiver antennae (A2, A3), iii) to derive said first and second phase differences of the third phase differences corresponding to said frequency deviation, iv) to derive the first or second consecutive phase differences and the third consecutive phase differences of the variation measurements of the first or second operating difference, and v) to derive the variation measurements for the first or second operating difference of the unambiguous measurements of said first and second operating differences corresponding to the first or second frequency.

5.  Device according to one of claims 1 to 4, **characterised in that** it comprises second measuring means (M3) arranged to estimate the distance separating their spacecraft (SI) from said other spacecraft (Si') in the group, from said first and/or second signals received by at least one of said antennae (A1-A3) and originating from said other spacecraft (Si'), and **in that** said processing means (MT) are arranged to determine the relative positions of said spacecraft (Si') in relation to their space craft (Si), from said estimated distances and said accurately estimated transmission direction.

6.  Device according to claim 5, **characterised in that** said second measuring means (M3) are arranged to estimate the distance separating their spacecraft (Si) from said other spacecraft (Si') in the group, from said first and/or second signals received by at least one of said antennae (A1-A3) and originating from said other spacecraft (Si') and from auxiliary signals transmitted by said other spacecraft (Si') and representing the distance separating it from said spacecraft (Si).

7.  Device according to one of claims 5 or 6, **characterised in that** said processing means (MT) are arranged to compensate said distance measurement and/or said accurate transmission direction measurement in relation to an effect caused by multiple trips, from the stored cartographic data and said transmission direction of the signals.

8.  Device according to one of claims 1 to 7, **characterised in that** it comprises at least two antenna assemblies on at least two surfaces having different orientations.

9.  Device according to one of claims 1 to 8, **characterised in that** it comprises at least one additional transmitter/ receiver antenna (A4) on at least one surface without an antenna assembly.

10. Device according to one of claims 1 to 9, **characterised in that** said antennae (A1-A3) are capable of transmitting and/or receiving the first and second radio-frequency signals in the form of first and second carriers, at least one of which is modulated by a chosen pseudo-random code.

11. Device according to one of claims 1 to 10, **characterised in that** said frequency deviation corresponds to a wave length which is at least equal to twice the distance separating said transmitter/receiver antenna (A1) of each of said receiving antennae (A2, A3).

12. Device according to one of claims 1 to 11, **characterised in that** said antennae (A1-A3) are arranged to transmit/ receive the first and second carriers having the first and second frequencies belonging to a band of frequencies chosen from a group comprising the bands S, SHF and EHF.

13. Device according to claim 12, **characterised in that** said frequency band is band S.

14. Spacecraft (S1) designed to move in formation as part of a group of spacecraft, **characterised in that** it comprises a control device (D) according to one of the previous claims.

**15.** Group of spacecraft (Si), designed to move within a chosen formation, **characterised in that** at least one of said spacecraft (S1) comprises a control device (D) according to one of claims 1 to 13, and **in that** at least some of the other spacecraft (S2, S3) comprise at least one transmitter/receiver antenna (A1) installed on at least one chosen surface.

**Patentansprüche**

**1.** Steuervorrichtung (D) für ein Raumschiff (SI) in einer Gruppe von Raumschiffen mit der Aufgabe, sich in einer gewählten Formation zu bewegen, die Folgendes umfasst:

- wenigstens eine Baugruppe, die eine Sende-/Empfangsantenne (A1) und zwei Empfangsantennen (A2, A3) umfasst, die in gewählten Bereichen auf einer Fläche des Raumschiffs (Si) angeordnet sind und angepasst sind, um Radiofrequenzsignale zu senden und/oder zu empfangen, wobei jede Antenne (A1-A3) der Baugruppe dazu angeordnet ist, das erste und das zweite Signal zu senden und/oder zu empfangen, die die erste und die zweite gewählte Frequenz haben, getrennt durch eine gewählte Frequenzabweichung,
- Verarbeitungsmittel (MT), die zum Schätzen der Senderichtungen der von den anderen Raumschiffen in der Gruppe emittierten Signale anhand der von den Antennen (A1-A3) empfangenen Signale angeordnet sind, jede Antenne (A1-A3) der Baugruppe [sic],
- erste Messmittel (M1), die zum Ermitteln der ersten und zweiten Betriebsdifferenzen zwischen Antennen (A1-A3), die der ersten oder zweiten Frequenz und der Frequenzabweichung entsprechen, anhand der von jeder der Antennen der Baugruppe empfangenen ersten und zweiten Signale angeordnet sind, die von einem anderen Raumschiff (Si') der Gruppe kommen,
- Lagemessmittel (M2), die zum Liefern von Messwerten für die von dem Raumschiff (Si) ausgeführte Rotation angeordnet sind,

wobei die Verarbeitungsmittel (MT) dazu angeordnet sind, a) die Senderichtung der von dem anderen Raumschiff (Si') emittierten Signale anhand der ersten und zweiten Betriebsdifferenzen, Anfangsreferenzen genannt, grob zu schätzen, b) eine grobe Positionierung des Raumschiffs (Si) zu veranlassen, **dadurch gekennzeichnet, dass** die grobe Positionierung des Raumschiffs so erzeugt wird, dass eine gewählte Achse (X) einer an dem Raumschiff angebrachten Referenz in Bezug auf die grob geschätzte Senderichtung im Wesentlichen ausgerichtet wird, und **dadurch**, dass die Verarbeitungsmittel (MT) so angeordnet sind, dass c) das Raumschiff (Si) in wenigstens eine gewählte Rotation um die gewählte Achse (X) versetzt wird, d) die Senderichtung der von dem anderen Raumschiff (Si') emittierten Signale anhand des von dem Lagemessmittel (M2) gelieferten Rotationsmesswertes und einer von dem ersten Messmittel (M1) ausgeführten Variationsmessung der ersten oder zweiten Betriebsdifferenz geschätzt wird, die durch die Rotation induziert wird.

**2.** Vorrichtung nach Anspruch 1, **dadurch gekennzeichnet, dass** die Verarbeitungsmittel (MT) dazu angeordnet sind, vor dem Veranlassen des In-Rotation-Versetzens die Befehle zum Veranlassen einer Stabilisierung der groben Positionierung mit einer Geschwindigkeit von quasi null des Raumschiffs (Si) anhand der vom ersten Messmittel (M1) ausgeführten Variationsmessung von der ersten oder zweiten Betriebsdifferenz zu erzeugen.

**3.** Vorrichtung nach Anspruch 1 oder 2, **dadurch gekennzeichnet, dass** die Verarbeitungsmittel dazu angeordnet sind, eine ständige genaue Kenntnis der Senderichtung anhand der Variationsmessungen der ersten oder zweiten Betriebsdifferenz zu vermitteln.

**4.** Vorrichtung nach einem der Ansprüche 1 bis 3, **dadurch gekennzeichnet, dass** die ersten Messmittel (M1) dazu angeordnet sind, i) die erste und zweite Phase der von einem anderen Raumschiff (Si') kommenden ersten und zweiten Signale zu bestimmen, die von jeder der Antennen (A1-A3) der Baugruppe empfangen wurden, ii) die erste und zweite Phase der ersten und zweiten Phasendifferenzen zwischen der Sende/Empfangsantenne (A1) und jeder der Empfangsantennen (A2, A3) abzuleiten, iii) die erste und zweite Phasendifferenz der dritten Phasendifferenzen abzuleiten, die der Frequenzabweichung entsprechen, iv) die erste oder zweite konsekutive Phasendifferenz und dritte konsekutive Phasendifferenzen der Variationsmessungen der ersten oder zweiten Betriebsdifferenz abzuleiten, und v) Variationsmesswerte für die erste oder zweite Betriebsdifferenz von eindeutigen Messwerten der ersten und zweiten Betriebsdifferenzen abzuleiten, die der ersten oder zweiten Frequenz entsprechen.

**5.** Vorrichtung nach einem der Ansprüche 1 bis 4, **dadurch gekennzeichnet, dass** sie zweite Messmittel (M3) zum Schätzen der Distanz umfasst, die ihr Raumschiff (SI) von dem anderen Raumschiff (Si') in der Gruppe trennt, anhand der ersten und/oder zweiten von dem anderen Raumschiff (Si') kommenden Signale, die von wenigstens einer der Antennen (A1-A3) empfangen wurden, und **dadurch**, dass die Verarbeitungsmittel (MT) dazu angeordnet sind, die relativen Positionen der Raumschiffe (Si') in Bezug auf ihr Raumschiff (Si) anhand der oben erwähnten geschätzten Distanzen und der genau geschätzten Senderichtung zu bestimmen.

6. Vorrichtung nach Anspruch 5, **dadurch gekennzeichnet, dass** die zweiten Messmittel (M3) dazu angeordnet sind, die Distanz, die ihr Raumschiff (Si) von dem anderen Raumschiff (Si') in der Gruppe trennt, anhand der ersten und/oder zweiten von dem anderen Raumschiff (Si') kommenden Signale, die von wenigstens einer der Antennen (A1-A3) empfangen wurden, und von Zusatzsignalen zu schätzen, die von dem anderen Raumschiff (Si') gesendet wurden und die Distanz repräsentieren, die es von dem Raumschiff (Si) trennt.

7. Vorrichtung nach Anspruch 5 oder 6, **dadurch gekennzeichnet, dass** die Verarbeitungsmittel (MT) dazu angeordnet sind, die Distanzmessung und/oder die genaue Senderichtungsmessung im Hinblick auf einen durch mehrere Wege verursachten Effekt anhand der gespeicherten kartografischen Daten und der Senderichtung der Signale zu korrigieren.

8. Vorrichtung nach einem der Ansprüche 1 bis 7, **dadurch gekennzeichnet, dass** sie wenigstens zwei Antennenbaugruppen auf wenigstens zwei unterschiedlich orientierten Flächen umfasst.

9. Vorrichtung nach einem der Ansprüche 1 bis 8, **dadurch gekennzeichnet, dass** sie wenigstens eine ergänzende Sende-/Empfangsantenne (A4) auf wenigstens einer Fläche ohne Antennenbaugruppe umfasst.

10. Vorrichtung nach einem der Ansprüche 1 bis 9, **dadurch gekennzeichnet, dass** die Antennen (A1-A3) die ersten und zweiten Radiofrequenzsignale in Form von ersten und zweiten Trägern senden und/oder empfangen können, von denen wenigstens einer durch einen gewählten pseudozufälligen Code moduliert ist.

11. Vorrichtung nach einem der Ansprüche 1 bis 10, **dadurch gekennzeichnet, dass** die Frequenzabweichung einer Wellenlänge entspricht, die wenigstens gleich dem Zweifachen der Distanz ist, die die Sende-/Empfangsantenne (A1) jeder der Empfangsantennen (A2, A3) trennt.

12. Vorrichtung nach einem der Ansprüche 1 bis 11, **dadurch gekennzeichnet, dass** die Antennen (A1-A3) zum Senden/Empfangen der ersten und zweiten Träger angeordnet sind, die die erste und zweite Frequenz aufweisen, die zu einem Frequenzband gehören, das aus der Gruppe bestehend aus dem S-, SHF- und EHF-Band ausgewählt ist.

13. Vorrichtung nach Anspruch 12, **dadurch gekennzeichnet, dass** das Frequenzband das S-Band ist.

14. Raumschiff (S1), das so ausgelegt ist, dass es sich in Formation im Rahmen einer Gruppe von Raumschiffen bewegt, **dadurch gekennzeichnet, dass** es eine Steuervorrichtung (D) nach einem der vorherigen Ansprüche umfasst.

15. Gruppe von Raumschiffen (Si) zum Bewegen in einer gewählten Formation, **dadurch gekennzeichnet, dass** wenigstens eines der Raumschiffe (S1) eine Steuervorrichtung (D) nach einem der Ansprüche 1 bis 13 umfasst, und **dadurch**, dass wenigstens einige der anderen Raumschiffe (S2, S3) wenigstens eine auf wenigstens einer gewählten Fläche installierte Sende/Empfangs-Antenne (A1) umfasst.

FIG.1

FIG.2

FIG.4

FIG.3

FIG.5

FIG.6

FIG.7

**EP 1 813 957 B1**

**RÉFÉRENCES CITÉES DANS LA DESCRIPTION**

**Documents brevets cités dans la description**

- US 6072433 A